# EUROPEAN PATENT APPLICATION

(11) **EP 4 801 010 A1**
(43) Date of publication of application: **02.09.2026**
(21) Application number: 23959965.7
(22) Date of filing: 01.12.2023
(51) Int. Cl.: H04L 67/12, H04W 48/02

(54) **COMMUNICATION METHODS AND DEVICES**

(71) Applicant: GUANGDONG OPPO MOBILE TELECOMMUNICATIONS CORP., LTD., Dongguan, Guangdong 523860 (CN)
(72) Inventor: LU, Fei, Dongguan, Guangdong 523860 (CN)
(74) Representative: RGTH
(86) International application number: PCT/CN2023/135968
(87) International publication number: WO 2025/112059

(57) **Abstract**

The present application relates to communication methods, devices, a computer-readable storage medium, a computer program product and a computer program. A method comprises: a first device receives indication information, wherein the indication information is used for determining whether to halt the first device.

## Description

### TECHNICAL FIELD

The present application relates to the field of communications, and more specifically, to a communication method, a communication device, a computer-readable storage medium, a computer program product, and a computer program.

### BACKGROUND

In the related art, a system performs management based on each user equipment (UE), such as maintaining a connection state or mobility management state for each UE. When network congestion occurs, a control plane network element of a core network may reject a UE from accessing the network through a mobility management procedure or reject a session establishment or modification procedure initiated by a UE through a session management procedure. However, in ambient IoT (ambient power-enabled Internet of Things, which may be abbreviated as AIoT), some AIoT devices do not need to remain connected to a network for a long time. In this case, how to prevent AIoT devices from occupying excessive resources or affecting other terminals has become a problem to be solved.

### SUMMARY

Embodiments of the present application provide a communication method, a communication device, a computer-readable storage medium, a computer program product, and a computer program.

The embodiments of the present application provide a communication method, which includes:
receiving, by a first device, indication information, where the indication information is used for the first device to determine whether to deactivate.

The embodiments of the present application provide a communication method, which includes:
transmitting, by a second device, indication information, where the indication information is used for one or more devices to determine whether to deactivate.

The embodiments of the present application provide a first device, which includes:
a first communication unit, configured to receive indication information, where the indication information is used for the first device to determine whether to deactivate.

The embodiments of the present application provide a second device, which includes:
a second communication unit, configured to transmit indication information, where the indication information is used for one or more devices to determine whether to deactivate.

The embodiments of the present application provide a first device, which includes a transceiver, a processor, and a memory. The memory is configured to store a computer program, the transceiver is configured to communicate with other devices, and the processor is configured to invoke and execute the computer program stored in the memory, to enable the first device to perform the above methods.

The embodiments of the present application provide a second device, which includes a transceiver, a processor, and a memory. The memory is configured to store a computer program, the transceiver is configured to communicate with other devices, and the processor is configured to invoke and execute the computer program stored in the memory, to enable the second device to perform the above methods.

The embodiments of the present application provide a chip configured to implement the above methods.

Specifically, the chip includes a processor configured to invoke and execute a computer program from a memory, to enable a device equipped with the chip to perform the above methods.

The embodiments of the present application provide a computer-readable storage medium configured to store a computer program that, when executed by a device, enables the device to perform the above methods.

The embodiments of the present application provide a computer program product including computer program instructions, where the computer program instructions enable a computer to perform the above methods.

The embodiments of the present application provide a computer program that, when executed on a computer, enables the computer to perform the above methods.

By adopting the solution provided by the embodiments, the first device may receive indication information, the indication information may be used for the first device to determine whether to deactivate. Thus, it is possible to avoid the problem in the related art where some devices that do not need to remain connected to a network for a long time cannot be controlled to be deactivated in time, resulting in these devices occupying excessive resources, thereby causing resource waste or affecting other terminals.

### BRIEF DESCRIPTION OF THE DRAWINGS

FIG. 1 is a schematic diagram of an application scenario according to embodiments of the present application.
FIG. 2 is a schematic diagram of a basic communication principle of an A-IoT system.
FIG. 3 is a schematic diagram of a 5G-based network system architecture.
FIG. 4 is a schematic flowchart of a communication method according to an embodiment of the present application.
FIG. 5 is a schematic flowchart of a communication method according to another embodiment of the present application.
FIGS. 6 to 10 are multiple exemplary flowcharts of a communication method according to an embodiment of the present application.
FIG. 11 is a schematic block diagram of a first device according to an embodiment of the present application.
FIG. 12 is a schematic block diagram of a second device according to an embodiment of the present application.
FIG. 13 is a schematic block diagram of a communication device according to embodiments of the present application.
FIG. 14 is a schematic block diagram of a chip according to embodiments of the present application.
FIG. 15 is a schematic block diagram of a communication system according to embodiments of the present application.

### DETAILED DESCRIPTION

The technical solutions in the embodiments of the present application will be described below with reference to the accompanying drawings.

The technical solutions in the embodiments of the present application may be applied to various communication systems, such as: a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (WiFi), a 5th-Generation (5G) system, or other communication systems.

Generally speaking, conventional communication systems support a limited number of connections, which are easy to be implemented. However, with the development of communication technologies, mobile communication systems will support not only conventional communication but also, for example, device to device (D2D) communication, machine to machine (M2M) communication, machine type communication (MTC), vehicle to vehicle (V2V) communication, or vehicle to everything (V2X) communication. The embodiments of the present application may also be applied to these communication systems. In a possible implementation, the communication system in the embodiments of the present application may be applied to a carrier aggregation (CA) scenario, a dual connectivity (DC) scenario, and a standalone (SA) networking scenario. In a possible implementation, the communication system in the embodiments of the present application may be applied to an unlicensed spectrum, where the unlicensed spectrum may also be considered a shared spectrum; alternatively, the communication system in the embodiments of the present application may also be applied to a licensed spectrum, where the licensed spectrum may also be considered a non-shared spectrum.

The embodiments of the present application are described with reference to a network device and a terminal device. The terminal device may also be referred to as user equipment (UE), an access terminal, a user unit, a user station, a mobile station, a mobile site, a remote station, a remote terminal, a mobile device, a user terminal, a terminal, a wireless communication device, a user agent, or a user apparatus. The terminal device may be a station (STAION, ST) in a WLAN, a cellular phone, a cordless phone, a session initiation protocol (SIP) phone, a wireless local loop (WLL) station, a personal digital assistant (PDA) device, a handheld device with wireless communication functions, a computing device or another processing device connected to wireless modem, an in-vehicle device, a wearable device, a terminal device in a next-generation communication system (e.g., an NR network), or a terminal device in a future evolved public land mobile network (PLMN). In the embodiments of the present application, the terminal device may be deployed on land, including indoor or outdoor, handheld, wearable, or in-vehicle; the terminal device may also be deployed on water (e.g., on a steamship); the terminal device may also be deployed in air (e.g., on an airplane, on a balloon, or on a satellite). In the embodiments of the present application, the terminal device may be a mobile phone, a pad, a computer with wireless transceiver functions, a virtual reality (VR) terminal device, an augmented reality (AR) terminal device, a wireless terminal device in industrial control, a wireless terminal device in self driving, a wireless terminal device in remote medical, a wireless terminal device in a smart grid, a wireless terminal device in transportation safety, a wireless terminal device in a smart city, or a wireless terminal device in a smart home. By way of example and not limitation, in the embodiments of the present application, the terminal device may further be a wearable device. The wearable device may also be referred to as a wearable smart device, which is a general term for devices that are developed by using wearable technology to intelligently design for everyday wear, such as glasses, gloves, a watch, clothing, or shoes. The wearable device is a portable device that is worn directly on the body, or integrated into a user's clothing or accessories. The wearable device is not only a hardware device, but also implements powerful functions through software support as well as data interaction, or cloud interaction. Generalized wearable smart devices include full-featured, large-sized devices that may implement full or partial functionality without relying on smart phones, such as a smart watch or smart glasses, and devices that focus on a certain type of application functionality only and need to be used in conjunction with other devices (e.g., smart phones), such as various smart bracelets or smart jewelry for monitoring physical signs.

In the embodiments of the present application, the network device may be a device for communicating with a mobile device. The network device may be an access point (AP) in WLAN, a base station (Base Transceiver Station, BTS) in GSM or CDMA, a base station (NodeB, NB) in WCDMA, an evolved base station (Evolutional Node B, eNB or eNodeB) in LTE, a relay station or an access point, an in-vehicle device, a wearable device, a network device (gNB) in an NR network, or a network device in a future evolved PLMN network or NTN network. By way of example and not limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite. Optionally, the network device may also be a base station set up on land, water, or the like. In the embodiments of the present application, the network device may provide services for a cell, and the terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cells here may include: a metro cell, a micro cell, a pico cell, a femto cell, etc. These small cells have characteristics of small coverage and low transmission power, and are suitable for providing high-speed data transmission services.

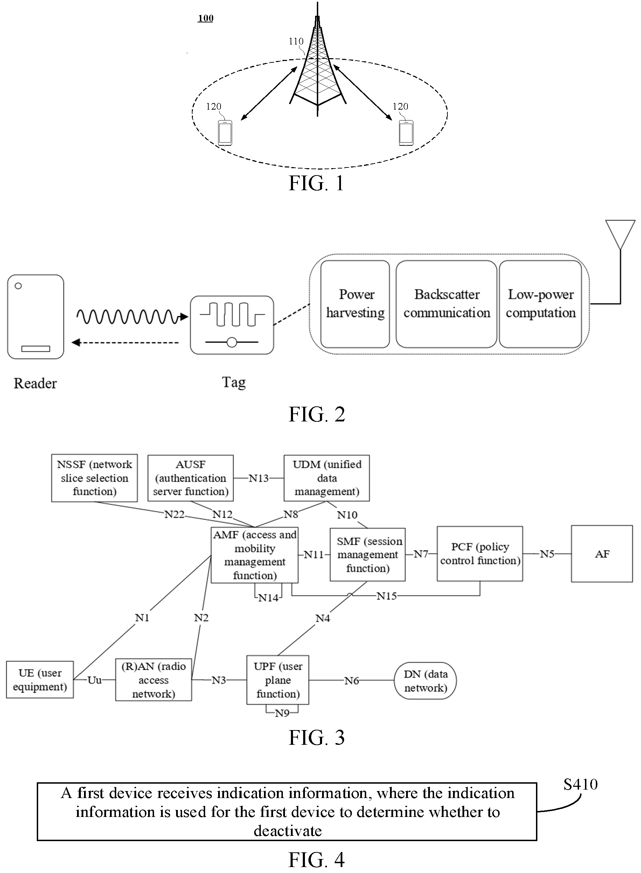

FIG. 1 exemplarily shows a communication system 100. The communication system includes a network device 110 and two terminal devices 120. In a possible implementation, the communication system 100 may include multiple network devices 110, and other numbers of terminal devices 120 may be in the coverage area of each network device 110, which is not limited in the embodiments of the present application. In a possible implementation, the communication system 100 may further include other network entities, such as a mobility management entity (MME) and an access and mobility management function (AMF), which are not limited in the embodiments of the present application. The network device may include an access network device and a core network device. That is, the wireless communication system further includes multiple core networks for communicating with the access network device. The access network device may be an evolutional base station (evolutional node B, which may be abbreviated as eNB or e-NodeB), a macro base station, a micro base station (also called "small base station"), a pico base station, an access point (AP), a transmission point (TP), or a new generation base station (new generation Node B, gNodeB), etc., in a long-term evolution (LTE) system, a next-generation (mobile communication system) (next radio, NR) system or an authorized auxiliary access long-term evolution (LAA-LTE) system. It should be understood that a device with communication functions in a network/system in the embodiments of the present application may be referred to as a communication device. Taking the communication system illustrated in FIG. 1 as an example, the communication devices may include the network device and the terminal devices, which have communication functions. The network device and the terminal devices may be specific devices in the embodiments of the present application, which will not be described in detail here. The communication devices may also include other devices in the communication system, such as other network entities like a network controller or a mobility management entity, which are not limited in the embodiments of the present application.

To facilitate the understanding of the embodiments of the present application, the basic procedures and concepts involved are briefly described below. It should be understood that the following description of basic procedures and concepts is not intended to limit the embodiments of the present application.

A zero-power communication network, specifically Ambient IoT (ambient power-enabled IoT, ambient harvesting Internet of Things), is a wireless communication technology suitable for short distances and low data rates. Ambient IoT (hereinafter abbreviated as A-IoT or AIoT) devices primarily combine radio frequency (RF) power harvesting, backscatter communication, and low-power computing technologies to achieve the advantage of device nodes not carrying a power supply. A basic communication principle of an A-IoT system is illustrated in FIG. 2, which includes a Reader (reader) and a Tag (tag). The tag may have functions such as power harvesting, backscatter communication, and low-power computation. Power harvesting, referred to RF power harvesting, at its core, converts radio frequency power into direct current (DC). The power may be stored in a battery or capacitor, or it may be used directly after collection to drive a logic circuit, a digital chip, or a sensor component to complete functions and applications such as modulating and transmitting backscatter signals, and collecting and processing sensing information. The tag is a type of A-IoT device.

With the development of 5G systems, the requirements for 5G systems to support A-IoT device accessing the network has emerged in 3GPP standards. The scenarios primarily targeted by A-IoT device accessing the network have the following characteristics: extreme environments, unsuitable for ordinary terminals; use of very low-power and low-cost terminals; and battery-less terminals. A-IoT system may be used in scenarios such as a wireless industrial sensing network, smart agriculture, smart warehousing and logistics, and smart home. Based on power sources and usage methods of A-IoT devices, A-IoT devices (or A-IoT terminals, or Ambient IoT terminals) may be classified into the following types.
1) Passive Ambient IoT terminal: an Ambient IoT terminal does not require a built-in battery. When the Ambient IoT terminal is close to a network device (e.g., a reader in an RFID system), the Ambient IoT terminal is within a near-field range formed by radiation from an antenna of the network device. Therefore, an antenna of the Ambient IoT terminal generates an induced current through electromagnetic induction, which drives a low-power chip circuit of the Ambient IoT terminal, implementing operations such as demodulation of forward link signals and modulation of backward link signals. For a backscatter link, the Ambient IoT terminal implements signal transmission by using backscatter.

As can be seen that, the passive Ambient IoT terminal does not need a built-in battery to drive either the forward link or the backward link, and is a true ambient IoT terminal.

The passive Ambient IoT terminal does not require a battery, and its radio frequency and baseband circuits are very simple, for example, not requiring components such as an LNA (low-noise amplifier), a PA (power amplifier), a crystal oscillator, or an ADC. Therefore, it possesses numerous advantages, such as small size, light weight, very low cost, and a long operational lifespan.

The characteristics of this terminal device may further include: being battery-less; harvesting power from the surrounding environment (such as radio waves, solar power, wind power, or mechanical kinetic power); and having no USIM card. It may further store a certain amount of power through the surrounding environment, but the amount is very small, so supported functional logics are much less than that of an ordinary mobile phone-type terminal.

2) Semi-passive Ambient IoT terminal: it does not have a conventional battery itself, but may use an RF power harvesting module to harvest radio wave power and store the harvested power in an power storage unit (e.g., a capacitor). After the power storage unit obtains power, it may drive the low-power chip circuit of the Ambient IoT terminal, implementing operations such as demodulation of forward link signals and modulation of backward link signals. For the backscatter link, the Ambient IoT terminal implements signal transmission by using backscatter. As can be seen that, the semi-passive ambient IoT terminal does not need a built-in battery to drive either the forward link or the backward link. Although it uses power stored in the capacitor during operations, the power is derived from the radio power harvested by the power harvesting module. Thus, it also is a true Ambient IoT terminal.

Semi-passive Ambient IoT terminal inherits many advantages of the passive Ambient IoT terminal, and therefore it also possesses numerous advantages, such as small size, light weight, very low cost, and a long operational lifespan.

3) Active Ambient IoT terminal: an Ambient IoT terminal used in some scenarios, may be an active Ambient IoT terminal, this terminal may have a built-in battery. The battery is used to drive the low-power chip circuitry of the Ambient IoT terminal, implementing functions such as the demodulation of forward link signals and the modulation of backward link signals. But for the backscatter link, the Ambient IoT terminal implements signal transmission by using backscatter. Therefore, this Ambient IoT terminal is primarily reflected in that signal transmission on the backward link does not need power of the terminal itself, but uses backscatter. The active Ambient IoT terminal supplies power to an RFID chip through a built-in battery, to extend read/write distance of a tag and enhance communication reliability. Based on this, it is applicable in scenarios with relatively high requirements for communication distance and read latency. Here, the Ambient IoT terminal may be a tag or a standard device.

A schematic diagram of the 5G network system architecture is illustrated in FIG. 3. Specifically, an NSSF (network slice selection function) is primarily used to manage network slice-related information, for example, selecting a network slice for a terminal device. An AUSF (authentication server function) is used to perform identity authentication for user access. A UDM (unified data management) is used to manage and store subscription data and authentication data. An AMF (access and mobility management function) is used to complete mobility management, security anchor, and security policy management for a UE. An SMF (session management function) is used to complete session management, UE IP address allocation and management. A PCF (policy control function) is responsible for formulating policies related to mobility management, session management, and charging for the UE. An AF (application function) is used for external application servers. A UPF (user plane function) is responsible for user plane processing. A DN (data network) is a 5GC external data network (e.g., Internet). Data is transmitted via corresponding interfaces between various nodes in the 5GC (5G Core Network), between a user equipment (UE) and 5GC nodes, between a UE and a radio access network ((R)AN), and between an RAN and 5GC nodes. For example, as illustrated in FIG. 3, data transmission is performed between the AMF and the NSSF in the 5GC via an N22 interface; data transmission is performed between the AMF and the SMF via an N11 interface; data transmission is performed between the AMF and the AUSF via an N12; and data transmission is performed between the AMF and the UDM via an N8 interface. Data transmission is performed between the SMF and the UPF via an N4 interface. Data transmission is performed between the UPF and the external data network via an N6 interface, and data transmission is performed between the UPF and the AN via an N3 interface. The UE establishes an access stratum connection with the AN via a Uu interface to exchange access stratum messages and transmit radio data; the UE establishes a non-access stratum (NAS) connection with the AMF via an N1 interface to exchange NAS messages. Data transmission is performed between the RAN and the AMF via an N2 interface, and data transmission is performed between the RAN and the UPF via an N3 interface. It should be understood that, the description above covers only the interfaces between some nodes, other interfaces between other nodes in the 5GC illustrated in FIG. 3 are not detailed herein.

In the conventional 5G architecture, the registration procedure is managed based on each UE. The management includes temporary assignments for each UE and the maintenance of the connection state or mobility management state for each UE. State transitions between these mobility management states are performed via NAS messages. To transmit or receive data (even if receiving or transmitting a small amount of data), a UE still needs to establish a PDU session. When network congestion occurs, the AMF may reject a UE from accessing the network through the mobility management procedure, or the SMF may reject a session establishment or modification procedure initiated by a UE through the session management procedure.

However, in an Ambient IoT network, to make power consumption during communication procedure as low as possible, the complexity of the Ambient IoT device is also relatively low, some Ambient IoT devices do not need to access the network for a long time. For example, in a logistics scenario, the Ambient IoT device may only need to access the 3GPP network or make the 3GPP network sense its presence within a specific time or a specific area. To address such requirements, the network side needs to control the Ambient IoT device in a timely manner. The present invention achieves timely control for the Ambient IoT device in the Ambient IoT network, thereby avoiding the Ambient IoT device from occupying excessive resources or affecting other terminals (including 3GPP smart terminals or other IoT terminals).

It should be understood that, the terms "system" and "network" are often used interchangeably herein. The term "and/or" herein is merely used to describe an association relationship between associated objects, indicating that three relationships can exist. For example, "A and/or B" may represent that there are three situations: A alone, both A and B, B alone. In addition, the character "/" herein generally indicates that related objects before and after this character are in an "or" relationship. It should be understood that, "indicate" mentioned in the embodiments of the present application may refer to a direct indication, an indirect indication, or represent that there is an association relationship. For example, A indicating B may mean that A directly indicates B, e.g., B may be obtained through A; it may also mean that A indirectly indicates B, e.g., A indicates C, and B may be obtained through C; or it may mean that there is an associative relationship between A and B. The term "correspond" described in the embodiments of the present application may mean a relationship of direct or indirect correspondence between the two, or a relationship of association between the two, a relationship of indicating and being indicated, or a relationship of configuring and being configured, or the like.

FIG. 4 is a schematic flowchart of a communication method according to an embodiment of the present application. The method includes at least portion of the following content.

In S410, a first device receives indication information, where the indication information is used for the first device to determine whether to deactivate.

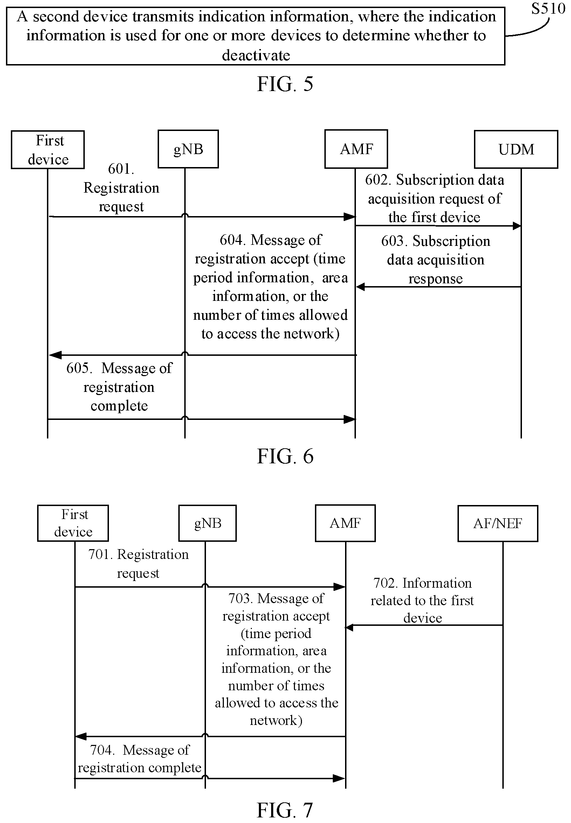

FIG. 5 is a schematic flowchart of a communication method according to another embodiment of the present application. The method includes at least portion of the following content.

In S510, a second device transmits indication information, where the indication information is used for one or more devices to determine whether to deactivate.

Here, the first device may be an AIoT device. In some possible examples, the first device may also be any one of an Internet of Things (IoT) device, a zero-power device, or a low-power device, which is not exhaustively listed herein.

Each of the one or more devices may be an AIoT device. The one or more devices are different from the second device. In some possible examples, any one device may also be any one of an Internet of Things (IoT) device, a zero-power device, or a low-power device, which is not exhaustively listed herein.

The second device may be one of: a first core network device, an access network device, or a terminal.

The first core network device may be a first control plane network element. For example, the second device may be an AMF.

The access network device may be an access network device that serves the first device and/or the one or more devices.

The terminal may be a terminal capable of serving as an intermediate device or a proxy device for the first device and/or the one or more devices, which means that the first device and/or the one or more devices may interact with network-side devices via the terminal. In some possible examples, the terminal may also be referred to as a relay UE, a proxy UE, or the like.

In some possible implementations, the indication information includes a condition for allowing access to a network that relates to the first device, and the condition for allowing access to the network that relates to the first device is used for the first device to determine whether to deactivate. The first device is one of the one or more devices.

The condition for allowing access to the network that relates to the first device may be categorized based on different dimensions, and the dimensions may include at least one of dimension: device, group, or service. Specifically, the condition for allowing access to the network that relates to the first device includes at least one of: a condition for allowing access to the network corresponding to a service run by the first device; a condition for allowing access to the network corresponding to a group to which the first device belongs; or a condition for allowing access to the network corresponding to the first device. For the sake of brevity in the following examples, these conditions may be briefly described in a substitutive manner. The condition for allowing access to the network corresponding to the service run by the first device will be abbreviate as a service-dimension condition, the condition for allowing access to the network corresponding to the group to which the first device belongs will be abbreviate as a group-dimension condition, and the condition for allowing access to the network corresponding to the first device will be abbreviate as a device-dimension condition, which will not be explained again hereinafter.

The condition for allowing access to the network includes at least one of: a time allowed to access the network, an area allowed to access the network, or the number of times allowed to access the network.

Specifically, in conjunction with the dimensions of the condition, the condition for allowing access to the network that relates to the first device includes at least one of: a time allowed to access the network corresponding to the service run by the first device, an area allowed to access the network corresponding to the service run by the first device, the number of times allowed to access the network corresponding to the service run by the first device, a time allowed to access the network corresponding to the group to which the first device belongs, an area allowed to access the network corresponding to the group to which the first device belongs, the number of times allowed to access the network corresponding to the group to which the first device belongs, a time allowed to access the network corresponding to the first device, an area allowed to access the network corresponding to the first device, or the number of times allowed to access the network corresponding to the first device.

To be more specific, the condition for allowing access to the network that relates to the first device includes at least one of: the condition for allowing access to the network corresponding to the service run by the first device (e.g., the service-dimension condition); the condition for allowing access to the network corresponding to the group to which the first device belongs (e.g., the group-dimension condition); or the condition for allowing access to the network corresponding to the first device (e.g., the device-dimension condition). The condition for allowing access to the network corresponding to the service run by the first device (e.g., the service-dimension condition) may include at least one of: the time allowed to access the network corresponding to the service run by the first device, the area allowed to access the network corresponding to the service run by the first device, or the number of times allowed to access the network corresponding to the service run by the first device. The condition for allowing access to the network corresponding to the group to which the first device belongs (e.g., the group-dimension condition) may include at least one of: the time allowed to access the network corresponding to the group to which the first device belongs, the area allowed to access the network corresponding to the group to which the first device belongs, or the number of times allowed to access the network corresponding to the group to which the first device belongs. The condition for allowing access to the network corresponding to the first device (e.g., the device-dimension condition) may include at least one of: the time allowed to access the network corresponding to the first device, the area allowed to access the network corresponding to the first device, or the number of times allowed to access the network corresponding to the first device.

The time allowed to access the network may include at least one of: one or more absolute time periods allowed to access the network, or a duration allowed to access the network. A time unit corresponding to the absolute time period and the duration may be any one of minutes, seconds, milliseconds, microseconds, slots, etc., which is not limited or exhaustively listed in the embodiments.

Optionally, the time allowed to access the network may include one or more absolute time periods allowed to access the network. Any absolute time period may include an absolute start time point (or moment), and an absolute end time point (or moment), and different absolute time periods may not overlap. For example, an absolute time period allowed to access the network may include that: an absolute start moment allowed to access the network may be 10:00 AM on date A, and an absolute end moment allowed to access the network may be 6:00 PM on date B, where date B is later than or equal to date A. This is merely an exemplary example, in practice, any absolute time period may be set to other time periods, which are not limited or exhaustively listed herein.

Optionally, the time allowed to access the network may include a duration allowed to access the network. In this case, the first device may start timing from a time point at which it actually accesses the network.

The area allowed to access the network may include at least one of: one or more cells allowed to access the network, one or more tracking areas allowed to access the network, or one or more geographical area ranges allowed to access the network.

Specifically, a specific representation manner of the one or more cells allowed to access the network may be: an identifier of each cell of the one or more cells allowed to access the network. Exemplarily, an identifier of any one cell may be a PCI (physical cell identifier).

A specific representation manner of the one or more TAs allowed to access the network may be: a TAC (tracking area code) and/or a TAI (tracking area identity, TA identity) corresponding to each TA of the one or more TAs allowed to access the network.

A specific representation manner of the one or more geographical area ranges allowed to access the network may be: coordinates of each geographical area range of the one or more geographical area ranges allowed to access the network. Exemplarily, coordinates of any one geographical area range may be coordinates of a center point of the geographical area range and/or coordinates of one or more boundary locations of the geographical area range. Any coordinates may be represented using GPS coordinates.

The number of times allowed to access the network may refer to at least one of: the number of times for registrations, or the number of times for NAS connection initiations.

The first device may receive the indication information during the registration procedure. Before the first device receives the indication information, the method further includes: transmitting, by the first device, a first request message, where the first request message is used to request access to the network. Correspondingly, before the second device transmits the indication information, the method further includes: receiving, by the second device, the first request message transmitted by the first device, where the first request message is used to request access to the network.

In the implementation, the second device is a second core network device. For example, the second device may be an AMF.

The first request message may be a registration request or a registration request message.

The first request message may carry one or more identifiers. Specifically, the first request message carries at least one of: an identifier of the first device, an identifier of a service run by the first device, and an identifier of a group to which the first device belongs.

The identifier of the first device may include, but is not limited to, at least one of: the number of the first device, a product serial number of the first device, an SUPI (subscription permanent identifier) of the first device, an SUCI (subscription concealed identifier) of the first device, a PEI (permanent equipment identifier) of the first device, a 5G-GUTI (5G globally unique temporary identifier) of the first device, an internal-group identifier (IGI) of the first device, or a GPSI (generic public subscription identifier) of the first device.

Optionally, the first device may run or support one service at a time, and the service run by the first device may refer to a sole service currently run by the first device. The identifier of the service run by the first device may include at least one of: a name of the service run by the first device, an ID of the service run by the first device, or the number of the service run by the first device.

Optionally, the service run by the first device may be replaced with an application run by the first device. The identifier of the service may also be replaced with an identifier of the application. For example, the identifier of the service run by the first device may include: a name of the application run by the first device, an ID of the application run by the first device, the number of the application run by the first device.

Optionally, the service run by the first device may also be represented by a DN (data network) corresponding to the first device and/or a network slice corresponding to the first device. The identifier of the service run by the first device may also be represented by a DNN (data network name) corresponding to the first device and/or an identifier of the network slice corresponding to the first device. The identifier of the network slice may be an S-NSSAI (single network slice selection assistance information).

Optionally, the service run by the first device may be at least one of: an inventory, a sensor data reporting, or a command. The identifier of the service run by the first device may also be represented by at least one of: an inventory, a sensor data reporting, or a command.

The first device may also belong to a group, and may be a device within the group. The group may have a corresponding identifier, for example, be represented as a Group ID.

In some possible implementations, after the second device receives the first request message transmitted by the first device, the method further includes: obtaining, by the second device, subscription data of the first device, where the subscription data of the first device is used to determine the condition for allowing access to the network that relates to the first device.

The subscription data of the first device obtained by the second device may include any one of: subscription data of the first device obtained by the second device from a second core network device; or subscription data of the first device obtained by the second device from a database of a service provider.

The subscription data of the first device obtained by the second device from the second core network device may include that: the second device transmits a subscription data acquisition request of the first device to the second core network device, and the second device receives a subscription data acquisition response from the second core network device, where the subscription data acquisition response carries the subscription data of the first device. The second core network device may include a UDM and/or a UDR (universal data repository).

In an embodiment, the identifier carried by the first request message may be used to indicate a dimension of the condition that is requested or required or needed to be obtained.

The condition included in the subscription data of the first device are related to or have a one-to-one correspondence with the identifier carried by the first request message. That is, in a case where the first request message carries the identifier of the first device, the subscription data of the first device may include the condition for allowing access to the network corresponding to the first device (i.e., a device-dimension condition); in a case where the first request message carries the identifier of the group to which the first device belongs, the subscription data of the first device may include the condition for allowing access to the network corresponding to the group to which the first device belongs (i.e., a group-dimension condition); and in a case where the first request message carries the identifier of the service run by the first device, the subscription data of the first device may include the condition for allowing access to the network corresponding to the service run by the first device (i.e., a service-dimension condition).

Optionally, the first request message carries any one of: the identifier of the group to which the first device belongs, the identifier of the service run by the first device, or the identifier of the first device. That is, the first request message can be used to indicate that the dimension of the condition that is requested or required or needed to be obtained is any one of the device dimension, the service dimension, or the group dimension.

The subscription data of the first device may include any one of: the device-dimension condition, the service-dimension condition, or the group-dimension condition. After obtaining the subscription data of the first device, the second device may perform the following processing: the second device directly uses the condition of one dimension included in the subscription data as the condition for allowing access to the network that relates to the first device.

Taking the case where the first request message only carries the identifier of the first device as an example, the first request message may be used to indicate the device-dimension condition requested or required or needed to be obtained.

The second device transmitting the subscription data acquisition request of the first device to the second core network device and receiving the subscription data acquisition response from the second core network device may include that: the second device may carry the identifier of the first device in the subscription data acquisition request and transmit it to the second core network device; the second device receives the subscription data acquisition response from the second core network device, where the subscription data acquisition response carries the subscription data of the first device, and the subscription data of the first device includes the condition for allowing access to the network corresponding to the first device. Correspondingly, the processing of the second core network device may include that: according to the identifier of the first device carried by the subscription data acquisition request of the first device, the second core network device may obtain the condition for allowing access to the network corresponding to the first device from locally stored identifier of each device of multiple devices and the condition for allowing access to the network corresponding to each device of the multiple devices; the second core network device may incorporate the condition for allowing access to the network corresponding to the first device in the subscription data of the first device and return it to the second device via the subscription data acquisition response.

Alternatively, a database of a service provider may store the identifier of each device of multiple devices and the condition for allowing access to the network corresponding to each device of multiple devices. The second device obtaining the subscription data of the first device from the database of the service provider may include that: the second device extracts the subscription data of the first device from the database of the service provider based on the identifier of the first device, where the subscription data of the first device includes the condition for allowing access to the network corresponding to the first device.

Furthermore, after obtaining the subscription information of the first device, the second device directly uses the condition for allowing access to the network corresponding to the first device included in the subscription information of the first device as the condition for allowing access to the network that relates to the first device.

The above is merely an exemplary example. The processing related to the first request message carrying other identifiers and obtaining the corresponding conditions is similar to the processing related to the first request message carrying the identifier of the first device and obtaining the condition for allowing access to the network corresponding to the first device, which will not be described in detail.

Optionally, the first request message may also simultaneously carry at least two of the following: the identifier of the group to which the first device belongs, the identifier of the service run by the first device, and the identifier of the first device. The first request message may be used to indicate that the condition that is requested or required or needed to be obtained includes two of the following: device dimension, service dimension, or group dimension. The subscription data of the first device may include two of the following: the device-dimension condition, the service-dimension condition, or the group-dimension condition.

In one case, after obtaining the subscription data of the first device, the second device may perform the following processing: the second device directly uses the conditions of multiple dimensions included in the subscription data of the first device as the condition for allowing access to the network that relates to the first device.

Taking the case where the first request message carries the identifier of the first device and the identifier of the group to which the first device belongs as an example, the first request message may be used to indicate the device-dimension condition and the group-dimension condition that are requested or required or needed to be obtained.

The second device transmitting the subscription data acquisition request of the first device to the second core network device and receiving the subscription data acquisition response from the second core network device may include that: the second device may carry the identifier of the first device and the identifier of the group to which the first device belongs in the subscription data acquisition request of the first device and transmit it to the second core network device; the second device receives the subscription data acquisition response from the second core network device, where the subscription data acquisition response carries the subscription data of the first device, and the subscription data of the first device include the condition for allowing access to the network corresponding to the first device and the condition for allowing access to the network corresponding to the group to which the first device belongs. Correspondingly, the processing of the second core network device may be that: according to the identifier of the first device and the identifier of the group to which the first device belongs carried in the subscription data acquisition request of the first device, the second core network device may obtain the condition for allowing access to the network corresponding to the first device from locally stored identifier of each device of multiple devices and the condition for allowing access to the network corresponding to each device of multiple devices, the second core network device may incorporate the condition for allowing access to the network corresponding to the first device in the subscription data of the first device, and return it to the second device via the subscription data acquisition response.

Alternatively, a database of a service provider may store the identifier of each device of multiple devices and the condition for allowing access to the network corresponding to each device of multiple devices. The second device obtaining the subscription data of the first device from the database of the service provider may include that: the second device extracts the subscription data of the first device from the database of the service provider based on the identifier of the first device, where the subscription data of the first device includes the condition for allowing access to the network corresponding to the first device and the condition for allowing access to the network corresponding to the group to which the first device belongs.

After obtaining the subscription data of the first device, the second device directly uses the condition for allowing access to the network corresponding to the first device and the condition for allowing access to the network corresponding to the group to which the first device belongs included in the subscription data as the condition for allowing access to the network that relates to the first device.

This is merely an exemplary example. In practice, the first request message may carry multiple identifiers in other combinations or may carry all possible identifiers at once. However, regardless of the number of identifiers carried in the first request message, the method for obtaining the dimension condition corresponding to each identifier is similar to that described in the above embodiments, which will not be repeated here.

In another case, after obtaining the subscription data of the first device, the second device may perform the following processing: the second device selects, from among the conditions of multiple dimensions included in the subscription data of the first device, a condition of one dimension as the condition for allowing access to the network that relates to the first device. The selection manner may be that: in a case where the conditions of multiple dimensions have corresponding priorities, a condition with the highest priority is selected; a condition of one dimension is selected arbitrarily; a condition of one dimension with the most stringent requirement is selected; or a condition of one dimension with the least stringent requirement is selected.

The most stringent requirement may refer to at least one of: the time allowed to access the network is the shortest time allowed to access the network, the area allowed to access the network is the smallest area allowed to access the network, or the number of times allowed to access the network is the minimum number of times allowed to access the network. The shortest time allowed to access the network may refer to the earliest end moment determined based on the time allowed to access the network. The least stringent requirements may refer to at least one of: the time allowed to access the network is the longest time allowed to access the network, the area allowed to access the network is the largest area allowed to access the network, or the number of times allowed to access the network is the maximum number of times allowed to access the network.

For example, the first request message may simultaneously carry the identifier of the group to which the first device belongs and the identifier of the first device. In this case, the subscription data of the first device may include the condition for allowing access to the network corresponding to the first device and the condition for allowing access to the network corresponding to the group to which the first device belongs. In a case where the group-dimension condition has the highest priority, the second device may use the condition for allowing access to the network corresponding to the group to which the first device belongs as the condition for allowing access to the network that relates to the first device. Alternatively, in a case where the condition for allowing access to the network corresponding to the group to which the first device belongs has the most stringent requirement, the second device may use the condition for allowing access to the network corresponding to the group to which the first device belongs as the condition for allowing access to the network that relates to the first device. It should be understood that, these are merely exemplary examples, and the actual processing is not limited to the cases described herein, which are not limited or exhaustively listed herein.

In one embodiment, the second device may obtain all subscription data related to the first device. For example, after receiving the first request message carrying the identifier of the first device, the second device may obtain the subscription data of the first device, where the subscription data of the first device includes all subscription data related to the first device. The method for obtaining, by the second device, the subscription data of the first device is similar to that described in the above embodiments, which will not be repeated here.

After obtaining the subscription data of the first device, the processing of the second device may include at least one of: extracting, based on the identifier of the first device, the condition for allowing access to the network corresponding to the first device from the subscription data of the first device; in a case where it is determined that the first device belongs to the group based on the identifier of the first device, and the subscription data of the first device includes the condition for allowing access to the network corresponding to the group to which the first device belongs, extracting the condition for allowing access to the network corresponding to the group to which the first device belongs; or in a case where the service run by the first device is determined based on the identifier of the first device, and the subscription data of the first device includes the condition for allowing access to the network corresponding to the service run by the first device, extracting the condition for allowing access to the network corresponding to the service run by the first device.

The processing of the second device may further include one of: in a case where any one of the condition for allowing access to the network corresponding to the first device, the condition for allowing access to the network corresponding to the group to which the first device belongs, and the condition for allowing access to the network corresponding to the service run by the first device is obtained, using the obtained condition as the condition for allowing access to the network that relates to the first device; in a case where multiple conditions among the condition for allowing access to the network corresponding to the first device, the condition for allowing access to the network corresponding to the group to which the first device belongs, and the condition for allowing access to the network corresponding to the service run by the first device are obtained, using obtained multiple conditions as the condition for allowing access to the network that relates to the first device; or in a case where the conditions of multiple dimensions among the condition for allowing access to the network corresponding to the first device, the condition for allowing access to the network corresponding to the group to which the first device belongs, and the condition for allowing access to the network corresponding to the service run by the first device are obtained, selecting a condition of one dimension from the conditions of multiple dimensions as the condition for allowing access to the network that relates to the first device.

The manner for selecting a condition of one dimension from the conditions of multiple dimensions is the same as in the above embodiments, which will not be repeated here. For example, in a case where the condition for allowing access to the network corresponding to the first device and the condition for allowing access to the network corresponding to the group to which the first device belongs are obtained, the second device may select the condition with the most stringent requirement from the condition for allowing access to the network corresponding to the first device and the condition for allowing access to the network corresponding to the group to which the first device belongs as the condition for allowing access to the network that relates to the first device. This is merely an exemplary example and is not intended to be an exhaustive list of all possible cases.

In some possible implementations, before the second device transmits the indication information, the method further includes: receiving, by the second device, first information, where the first information is used to determine the condition for allowing access to the network that relates to the first device.

Furthermore, the timing for the second device to receive the first information may be before the second device receives the first request message transmitted by the first device, or after the second device receives the first request message transmitted by the first device but before the second device transmits the indication information.

Specifically, the second device receiving the first information may include that: the second device receives the first information from an application server (e.g., AF). The first information may be transmitted directly by the AF to the second device, or may be transmitted by the AF to the second device via the NEF.

Here, the first information may include a candidate condition for allowing access to the network that relates to each device of one or more devices, and the one or more devices include the first device. It should be understood that the candidate condition for allowing access to the network that relates to each device may correspond or be associated with an identifier of each device. The candidate condition for allowing access to the network that relates to each device may include: a condition for allowing access to the network corresponding to a service run by the device, a condition for allowing access to the network corresponding to a group to which the device belongs, or a condition for allowing access to the network corresponding to the device. It should be noted that the condition for allowing access to the network corresponding to the service run by the device may correspond or be associated with an identifier of the service (and may also correspond or be associated with the identifier of the device), the condition for allowing access to the network corresponding to the group to which the device belongs may correspond or be associated with an identifier the group (and may also correspond or be associated with the identifier of the device), and the condition for allowing access to the network corresponding to the device also corresponds or is associated with the identifier of the device.

After receiving the first request message from the first device, the second device may perform the following processing: determining the condition for allowing access to the network that relates to the first device based on the first request message and the first information.

Determining the condition for allowing access to the network that relates to the first device based on the first request message and the first information may include: extracting, based on the one or more identifiers carried in the first request message, a condition of a dimension corresponding to each identifier from the first information; and determining the condition for allowing access to the network that relates to the first device based on the condition of the dimension corresponding to each identifier.

Extracting, based on the one or more identifiers carried in the first request message, the condition of the dimension corresponding to each identifier from the first information may include at least one of: in a case where the first request message carries the identifier of the first device, extracting the condition for allowing access to the network corresponding to the first device from the first information; in a case where the first request message carries the identifier of the group to which the first device belongs, extracting the condition for allowing access to the network corresponding to the group to which the first device belongs from the first information; in a case where the first request message carries the identifier of the service run by the first device, extracting the condition for allowing access to the network corresponding to the service run by the first device from the first information.

Determining the condition for allowing access to the network that relates to the first device based on the condition of the dimension corresponding to each identifier may refer to one of: in a case where one condition among the condition for allowing access to the network corresponding to the service run by the first device, the condition for allowing access to the network corresponding to the group to which the first device belongs and the condition for allowing access to the network corresponding to the first device is extracted from the first information, directly using the one condition as the condition for allowing access to the network that relates to the first device; in a case where multiple conditions among the condition for allowing access to the network corresponding to the service run by the first device, the condition for allowing access to the network corresponding to the group to which the first device belongs and the condition for allowing access to the network corresponding to the first device are extracted from the first information, directly using the multiple conditions as the condition for allowing access to the network that relates to the first device; in a case where conditions of multiple dimensions among the condition for allowing access to the network corresponding to the service run by the first device, the condition for allowing access to the network corresponding to the group to which the first device belongs and the condition for allowing access to the network corresponding to the first device are extracted from the first information, selecting a condition of one dimension from the conditions of multiple dimensions as the condition for allowing access to the network that relates to the first device. The method for selecting the condition of one dimension from the conditions of multiple dimensions is the same as in the above embodiments, which will not be repeated here.

In some possible implementations, the processing after the second device obtains the condition for allowing access to the network that relates to the first device may include: transmitting, by the second device, the indication information.

The second device transmitting the indication information may include: transmitting, by the second device, the indication information to the first device. Correspondingly, the first device receiving the indication information may include: receiving, by the first device, the indication information from the second device.

The indication information is carried by a first response message corresponding to the first request message. The first response message may be a registration response message.

The first response message is used to indicate acceptance that the first device accesses the network. Alternatively, the first response message is used to indicate denying the first device access to the network. Correspondingly, the second device transmitting the indication information includes one of: transmitting, by the second device, the first response message to the first device, where the first response message is used to indicate acceptance that the first device accesses the network, and the first response message carries the indication information or transmitting, by the second device, the first response message to the first device, where the first response message is used to indicate denying the first device access to the network, and the first response message carries the indication information.

In one embodiment, the second device transmitting the indication information may refer to the second device directly transmitting the first response message to the first device, where the first response message is used to indicate acceptance that the first device accesses the network, and the first response message carries the indication information.

After receiving the first response message (i.e., the indication information), the first device may access the network. Furthermore, after the first device receives the indication information, the method further includes: determining, by the first device, to deactivate in a case where the condition for allowing access to the network that relates to the first device is not met.

The processing of which the first device determines whether the condition for allowing access to the network that relates to the first device is met may include: determining that the condition for allowing access to the network that relates to the first device is not met in any one of cases where a current location of the first device is not within the area allowed to access the network that relates to the first device, a current moment is not within the time allowed to access the network that relates to the first device, or the number of times for the first device accessing the network has exceeded the number of times allowed to access the network that relates to the first device. In addition, the processing may further include: determining that the condition for allowing access to the network that relates to the first device is met in at least one of cases where a current location of the first device is within the area allowed to access the network that relates to the first device, a current moment is within the time allowed to access the network that relates to the first device, or the number of times for the first device accessing the network has not exceeded the number of times allowed to access the network that relates to the first device.

As described in the above embodiments, the condition for allowing access to the network that relates to the first device may include conditions of one or more dimensions. Regardless of which dimension the condition for allowing access to the network that relates to the first device is, the determination performed by the first device is whether the condition for allowing access to the network is met, that is, whether at least one condition of the time allowed to access the network, the area allowed to access the network, or the number of times allowed to access the network is met. Therefore, the following description will primarily focus on the condition for allowing access to the network.

The method for determining that the current location is not within the area allowed to access the network may include at least one of: a cell corresponding to the current location of the first device is not one of one or more cells allowed to access the network; a TA corresponding to the current location of the first device is not one of one or more TAs allowed to access the network; or the current location of the first device is not within any one geographical area range of the one or more geographical area ranges allowed to access the network.

The method for determining that the current time is not within the time allowed to access the network may include at least one of: the current time is not within any one absolute time period of the one or more absolute time periods allowed to access the network; start timing after the first device accesses the network this time, a timer starts, and when the timing duration reaches or exceeds the duration allowed to access the network, determine that the current time is not within the time allowed to access the network.

For example, if the condition for allowing access to the network only includes one cell allowed to access the network, the first device only needs to determine that the condition for allowing access to the network is not met in a case where its current location is not within the cell allowed to access the network.

For example, the condition for allowing access to the network includes multiple cells allowed to access the network and the number of times allowed to access the network, the processing of the first device includes: determining that the condition for allowing access to the network that relates to the first device is not met in a case where the current location of the first device is not within any one cell allowed to access the network or the number of times for the first device accessing the network has exceeded the number of times allowed to access the network.

It should be understood that the above are merely exemplary examples, and is not intended to be an exhaustive or limiting list of every combination and its corresponding determination processing method.

In a preferred example, the first device determining to deactivate may refer to at least one of: the first device determines its own deactivation, or the first device determines to stop accessing the network. Here, the first device determining its own deactivation may refer to at least one of: the first device is deactivated, disabled or invalid in the system, or the first device is unable to access the network again. The first device determining to stop accessing the network may include at least one of: the first device determines to disconnect from the network this time, the first device determines not to access the network anymore, or the first device determines to no longer permit itself to access a network.

In an optional example, the first device determining to deactivate may refer to at least one of: the first device determines that it is currently deactivated, or the first device determines that it currently stops accessing the network. The first device determining that it is currently deactivated may refer to: the first device is currently deactivated in the system. The first device determining that it currently stops accessing the network may refer to: the first device determines to disconnect from the network this time.

The difference from the above embodiments is that, in this example, the first device determining to deactivate refers to determining to deactivate this time or currently, or disconnecting from the network this time. However, it may access the network again next time when the condition for allowing access to the network that relates to the first device is met, and it may deactivate again next time when the condition for allowing access to the network that relates to the first device is not met.

For example, the condition for allowing access to the network includes multiple cells allowed to access the network. In a case where the current location is not within any one cell allowed to access the network, the first device determines that the condition for allowing access to the network that relates to the first device is not met, and the first device determines to disconnect from the network currently or this time (i.e., determines to deactivate currently). In a case where current location of the first device is within one cell allowed to access the network, the first device determines that the condition for allowing access to the network that relates to the first device is met and the first device connects to or accesses the network currently or this time, until the current location of the first device is no longer within any one cell allowed to access the network, the first device disconnects from the network again. It should be understood that, this is merely an optional exemplary example and is not intended to be an exhaustive or limiting list of all possible scenarios.

In one embodiment, the second device transmitting the indication information includes one of: in a case where the first device meets the condition for allowing access to the network that relates to the first device, the second device transmits a first response message to the first device, where the first response message is used to indicate acceptance that the first device accesses the network, and the first response message carries the indication information; or in a case where the first device does not meet the condition for allowing access to the network that relates to the first device, the second device transmits a first response message to the first device, where the first response message is used to indicate denying the first device access to the network, and the first response message carries the indication information.

That is, the second device first determines whether the first device currently meets the condition for allowing access to the network that relates to the first device, and determines, based on the result, whether to accept the current registration of the first device, i.e., whether to allow the first device to access the network currently. The method for which the second device determines whether the first device meets the condition for allowing access to the network that relates to the first device is similar to the method for which the first device determines whether the condition for allowing access to the network that relates to the first device is met as described previously, which will not be repeated here.

Furthermore, after the first device receives the indication information (i.e., the first response message carrying the indication information), the method further includes: accessing, by the first device, the network, in a case where the first response message is used to indicate denying the first device access to the network and the condition for allowing access to the network that relates to the first device included in the indication information is met. Specifically, in a case where the first response message is used to indicate denying the first device access to the network and the condition for allowing access to the network that relates to the first device included in the indication information is met, the first device accesses the network, which may refer to that: the first device determines whether the first response message is used to indicate denying the first device access to the network, in a case where the first response message is used to indicate denying the first device access to the network, the first device continuously determines whether its own meets the condition for allowing access to the network that relates to the first device included in the indication information, and in a case where the first device determines that the condition for allowing access to the network that relates to the first device is met, the first device accesses the network.

Additionally, after the first device receives the indication information (i.e., the first response message carrying the indication information), the method may further include: in a case where the first response message is used to indicate acceptance that the first device accesses the network, the first device accesses the network.

The method for which the first device determines whether the condition for allowing access to the network that relates to the first device is met is the same as in the above embodiments, which will not be repeated here. The first device accessing the network may refer to: the first device transmits a second request message to the second device, where the second request message is used to request access to the network; and the first device receives a second response message from the second device, where the second response message is used to indicate acceptance that the first device accesses the network. Correspondingly, the processing of the second device may include: the second device receives the second request message from the first device, which is used to request access to the network; and the second device transmits the second response message to the first device, where the second response message is used to indicate acceptance that the first device accesses the network.

In the embodiment, after accessing the network, the first device will still perform the processing of determining to deactivate in a case where the condition for allowing access to the network that relates to the first device is not met. The specific processing is the same as that in the above embodiments, which will not be repeated here.

In one embodiment, the second device transmitting the indication information includes: the second device transmits a first response message to the first device, where the first response message is used to indicate denying the first device accesses the network, and the first response message carries the indication information. That is, regardless of whether the first device currently meets the condition for allowing access to the network that relates the first device, the second device rejects the current access request from the first device (i.e., denying the first device accesses the network).

In the embodiment, after the first device receives the indication information, the first device still needs to access the network in a case where the condition for allowing access to the network that relates to the first device is met. After accessing the network, the first device will still perform the processing of determining to deactivate in a case where the condition for allowing access to the network that relates to the first device is not met. The specific processing related to the first device is the same as that in the above embodiments, which will not be repeated here.

With reference to FIG. 6, an exemplary description of the aforementioned embodiments is provided. The scenario illustrated in FIG. 6 is that the CN (e.g., AMF) notifies the ambient IoT device (i.e., the first device) of at least one of the number of times, the time, or the area allowed to access the network. Specifically, this scenario includes the following steps.

In step 601, a first device transmits a registration request (to initiate the registration procedure) to a core network element (AMF). The registration request carries an identifier of the first device, the registration request may also carry a related service request, e.g., a service identifier. The related service or service identifier may be represented by an application ID, a DNN, or an S-NSSAI. Alternatively, the service may include any one of inventory, sensor data reporting, or command. For example, the related service or service identifier may be any one of inventory, sensor data reporting, or command. The registration request in step 601 corresponds to the first request message in the aforementioned embodiments.

In step 602, after receiving the registration request, the AMF transmits a subscription data acquisition request of the first device to a UDM or a database of a service provider, to obtain subscription data of the first device.

In step 603, the UDM returns a subscription data acquisition response to the AMF, which carries the subscription data. The subscription data may include the condition for allowing access to the network that relates to the first device, such as time period information allowed to access the network, area information allowed to access the network, or the number of times allowed to access the network.

In step 604, the core network element (AMF) returns a message of registration accept to the first device. The message includes the condition for allowing access to the network that relates to the first device, such as the time period information allowed to access the network, the area information allowed to access the network, or the number of times allowed to access the network. For example, the first device is only allowed to access the network during a specific time period, and the first device will automatically be deactivated when the first device exceeds the allowed period. Alternatively, the condition for allowing access to the network that relates to the first device includes specific area information, the area information may be cell information, a tracking area code (TAC), or specific geographical location information, and the first device will automatically be deactivated when exceeding the specific area information. Alternatively, the condition for allowing access to the network that relates to the first device includes the number of times for accessing, such as the number of times for registrations, or the number of times for NAS connection initiations, the first device will automatically be deactivated after exceeding the number of times.

In step 605, the first device returns a message of registration complete to the core network element (AMF).

It should be noted that, the procedure illustrated in FIG. 6 omits steps that are not related to the present application, such as the authentication process.

With reference to FIG. 7, another exemplary description of the aforementioned embodiments is provided, which specifically includes the following steps.

The description for step 701 is the same as that for step 601, which will not be repeated here.

In step 702, the AF transmits information related to the first device (i.e., the first information in the aforementioned embodiments) directly to the AMF, or the AF transmits information related to the first device to the AF via the NEF. The information related to the first device includes an ID of the first device, a condition for allowing access to the network that relates to the first device, such as time period information allowed to access the network, area information allowed to access the network, or the number of times allowed to access the network. The information related to the first device may include information corresponding to a service ID (i.e., an identifier of a service run by the first device), e.g., a condition for allowing access to the network corresponding to the service run by the first device, such as the time period information, area information, or the number of times, corresponding to the service, that the first device is allowed to access the network.

It should be noted that, step 702 may be executed either before step 701 or before step 703. The processing order provided in the example does not limit the execution order of step 702.

The description for step 703 to step 704 are the same as those for step 604 to step 605 in FIG. 6, which will not be repeated here.

It should be noted that, the procedure illustrated in FIG. 7 omits steps that are not related to the present application, such as the authentication process.

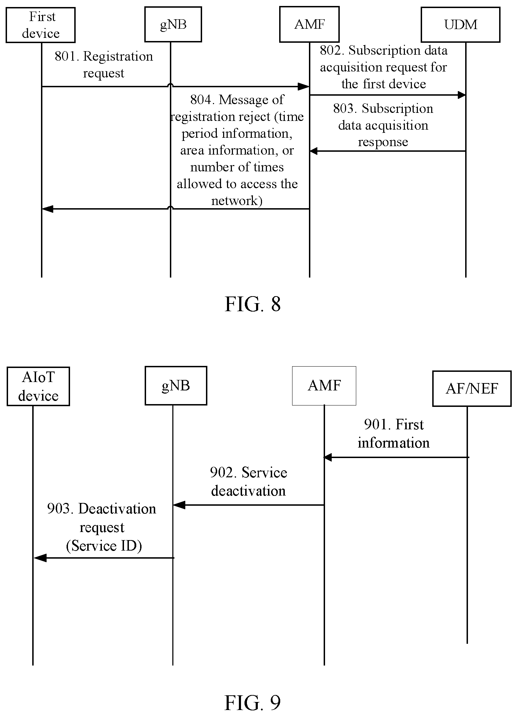

With reference to FIG. 8, yet another exemplary description of the aforementioned embodiments is provided, which specifically includes the following steps.

The descriptions for step 801 to step 803 are the same as those for step 601 to step 603, which will not be repeated here.

In step 804, the core network element AMF returns a message of registration reject to the first device. The message includes the condition for allowing access to the network that relates to the first device, such as time period information allowed to access the network, area information allowed to access the network, or the number of times allowed to access the network. For example, the first device is only allowed to access the network during a specific time period, and the first device will automatically be deactivated when the first device exceeds the allowed period. Alternatively, the condition for allowing access to the network that relates to the first device includes specific area information, the area information may be cell information, a tracking area code (TAC), or specific geographical location information, and the first device will automatically be deactivated when exceeding the specific area information. Alternatively, the condition for allowing access to the network that relates to the first device includes the number of times for accessing, such as the number of times for registrations or the number of times for NAS connections initiations, the first device will automatically be deactivated after exceeding the number of times.

In some possible implementations, the indication information is used to indicate at least one of: deactivation of the first device, deactivation of a first service, or deactivation of a first group. Specifically, the indication information is used to indicate at least one of: deactivation of the first device, where the first device is one of the one or more devices; deactivation of the first service, where the first service corresponds to the one or more devices; or deactivation of the first group, where the first group includes the one or more devices.

The indication information carries at least one of: an identifier of the first device, an identifier of the first service, or an identifier of the first group.

Before the second device transmits the indication information, the method further includes one of: determining that the first device is to be deactivated, in a case where the first device does not meet the condition for allowing access to the network that relates to the first device; determining that the one or more devices corresponding to the first service are to be deactivated, in a case where the first service meets an invalid condition corresponding to the first service; or determining that the one or more devices included in the first group are to be deactivated, in a case where the first group meets an invalid condition corresponding to the first group.

Before the second device transmits the indication information, the method further includes: receiving, by the second device, first information, where the first information is used to determine at least one of: the condition for allowing access to the network that relates to the first device, the invalid condition corresponding to the first service, or the invalid condition corresponding to the first group.

In some embodiments, the second device is a first core network device, such as an AMF. The AMF receiving the first information may refer to that the AMF receives the first information from an application server. The first information may be transmitted by the AF directly to the AMF, or may be transmitted by the AF to the AMF via the NEF.

The first information may include at least one of: a candidate condition for allowing access to the network that relates to each device of one or more devices, where the one or more devices includes the first device; an invalid condition corresponding to each service of one or more services, where the one or more services include the first service; or an invalid condition corresponding to each group of one or more groups, where the one or more groups include the first group.

The candidate condition for allowing access to the network that relates to each device may correspond to or be associated with an identifier of each device. The description of the candidate condition for allowing access to the network that relates to each device is the same as that in the above embodiments, which will not be repeated here.

The invalid condition corresponding to each group of the one or more groups may correspond to or be associated with an identifier of each group.

The invalid condition corresponding to each service of the one or more services may correspond to or be associated with an identifier of each service.

The invalid condition includes at least one of: an invalid time or an invalid area. Taking the first service as an example, the invalid condition corresponding to the first service may include at least one of: an invalid time corresponding to the first service, or an invalid area corresponding to the first service. Taking the first group as an example, the invalid condition corresponding to the first group may include at least one of: an invalid time corresponding to the first group, or an invalid area corresponding to the first group.

The invalid time may include an absolute invalid time point (or moment). The invalid area may include at least one of: one or more invalid cells, one or more invalid tracking areas, or one or more invalid geographical area ranges. The descriptions related to the cell, TA, and geographical area range are similar to those in the above embodiments, which will not be repeated here.

After receiving the first information and before transmitting the indication information, the AMF may perform at least one of processing: in a case where the first device does not meet the condition for allowing access to the network that relates to the first device among the one or more devices, the AMF determines that the first device is to be deactivated; in a case where the first service meets the invalid condition corresponding to the first service among the one or more services, the AMF determines that the one or more devices corresponding to the first service are to be deactivated; or in a case where the first group meets the invalid condition corresponding to the first group among the one or more groups, the AMF determines that the one or more devices included in the first group are to be deactivated.

In a possible embodiment, the AMF transmitting the indication information may refer to that: in a case where the AMF determines that the first device is to be deactivated, the AMF transmits the indication information to the first device, where the indication information carries the identifier of the first device and is used to indicate the deactivation of the first device.

Optionally, the AMF transmitting the indication information to the first device may refer to that: the AMF transmits a downlink NAS message to the first device, where the downlink NAS message carries the indication information.

Optionally, the AMF transmitting the indication information to the first device may refer to that: the AMF transmits a deactivation message to the first device via an access network device corresponding to the first device, where the deactivation message carries the indication information.

Specifically, the AMF transmitting the deactivation message to the first device via the access network device corresponding to the first device may be that: the AMF may transmit the deactivation message to the access network device corresponding to the first device, and the access network device transmits the deactivation message to the first device.

The access network device transmitting the deactivation message to the first device may include one of: the access network device transmits the deactivation message to the first device; or the access network device transmits the deactivation message to a terminal corresponding to the first device, and the terminal corresponding to the first device transmits the deactivation message to the first device. The deactivation message transmitted by the access network device to the first device may be a downlink AS (access stratum) message; the deactivation message transmitted by the terminal corresponding to the first device to the first device may be a sidelink message. The terminal corresponding to the first device may be a relay UE or a proxy UE of the first device, which is not intended to be an exhaustive or limiting list here.

It should be understood that, if the AMF receives the conditions for allowing access to the network corresponding to each device of multiple devices, the AMF may separately determine whether each device meets its condition for allowing access to the network. When it is determined that any one device does not meet corresponding condition, the AMF transmits the indication information to the device. The processing for each device is the same as that for the first device, which will not be described again.

In a possible embodiment, the AMF transmitting the indication information may refer to that: in a case where the AMF determines that the one or more devices corresponding to the first service are to be deactivated, the AMF transmits the indication information to the one or more devices corresponding to the first service, where the indication information carries the identifier of the first service and is used to indicate the deactivation of the first service.

Optionally, the AMF transmitting the indication information to the one or more devices corresponding to the first service may refer to that: the AMF transmits a downlink NAS message to each device of the one or more devices corresponding to the first service, where the downlink NAS message carries the indication information.

Optionally, the AMF transmitting the indication information to the one or more devices corresponding to the first service may refer to that: the AMF transmits a deactivation message to the one or more devices corresponding to the first service via an access network device, where the deactivation message carries the indication information.

In one case, the AMF transmitting the deactivation message to the one or more devices corresponding to the first service via the access network device may be that: in a case where the one or more devices corresponding to the first service correspond to the same access network device, the AMF transmits the deactivation message to the access network device, and the access network device transmits the deactivation message to each device corresponding to the first service.

The access network device transmitting the deactivation message to each device corresponding to the first service may be that: the access network device transmits the deactivation message to each device corresponding to the first service, where the deactivation message may be a broadcast message.

Alternatively, the access network device transmitting the deactivation message to each device corresponding to the first service may be that: in a case where the one or more devices corresponding to the first service correspond to the same terminal, the access network device transmits the deactivation message to the terminal, and the terminal transmits a deactivation message to each device corresponding to the first service, where the deactivation message transmitted by the terminal to each device corresponding to the first service may be a sidelink broadcast message.

In one case, the AMF transmitting the deactivation message to the one or more devices corresponding to the first service via the access network device may be that: in a case where the one or more devices corresponding to the first service correspond to multiple access network devices, the AMF transmits the deactivation message to the multiple access network devices, and each access network device of the multiple access network devices transmits the deactivation message to each device corresponding to the first service.

In this case, the processing of each access network device transmitting the deactivation message to each device corresponding to the first service is similar to that in above cases, which will not be described again.

It should be understood that, if the AMF receives the invalid condition corresponding to each service of multiple services, the AMF may separately determine whether each service meets its invalid condition. When it is determined that any one service meets corresponding invalid condition, the AMF transmits the indication information to each device corresponding to the service. The processing for each service is the same as that for the first service, which will not be described again.

In a possible embodiment, the AMF transmitting the indication information may refer to that: in a case where the AMF determines that the one or more devices corresponding to the first group are to be deactivated, the AMF transmits the indication information to the one or more devices corresponding to the first group, where the indication information carries an identifier of the first group and is used to indicate the deactivation of the first group. The related processing of this embodiment is similar to the related processing for the first service in the above embodiments. Simply replace the first service with the first group in the above example where the AMF transmits the indication information to the one or more devices corresponding to the first service, which will not be described again.

In some embodiments, the second device is an access network device. The access network device may serve one or more devices, the one or more devices include at least the first device. The access network device receiving the first information may refer to that the access network device receives the first information from an application server (AF) or an AMF.

In one case, the AF may determine the first information related to each access network device of multiple access network devices on the network side, and configure the access network devices via the AMF. The first information related to each access network device may include at least one of: a candidate condition for allowing access to the network that relates to each device of one or more devices served by, associated with, or managed by each access network device; an invalid condition corresponding to each service of one or more services served by, associated with, or managed by each access network device; or an invalid condition corresponding to each group of one or more groups served by, associated with, or managed by each access network device.

In one case, the AF may not determine the first information corresponding to each access network device, but instead transmit the first information as a whole to each access network device via the AMF. The access network device determines which condition(s) in the first information to be used based on its own associated devices, services, or groups. The possible content included in the first information is the same as that in the above embodiments, which will not be described again.

In one case, the AF (or the AF via the NEF) transmits second information to the AMF. The AMF determines, based on the second information, the first information related to each access network device of multiple access network devices associated with the AMF, and then transmits the first information related to each access network device to the access network device. The first information related to each access network device may refer to the first information related to at least one of the devices, services, or groups served by, associated with, or managed by the access network device.

For example, the second information may include at least one of: a candidate condition for allowing access to the network that relates to each device of multiple devices; an invalid condition corresponding to each service of multiple services; or an invalid condition corresponding to each group of multiple groups. The AMF determining, based on the second information, the first information related to each access network device of multiple access network devices associated with the AMF may refer to that the AMF extracts first information related to each access network device from the second information, based on at least one of the devices, services, or groups served by, associated with, or managed by each access network device. The description of the first information related to each access network device is the same as that in the above embodiments, which will not be repeated here.

The specific determining method performed by the access network device after receiving the first information is the same as that performed by the AMF in the aforementioned embodiments, which will not be described again.

In a possible embodiment, the access network device transmitting the indication information may refer to that: in a case where the access network device determines that the first device is to be deactivated, the access network device transmits the indication information to the first device, where the indication information carries the identifier of the first device and is used to indicate the deactivation of the first device.

The indication information may be transmitted by the access network device directly to the first device, and the indication information may be a downlink AS (access stratum) message. Alternatively, the indication information may be transmitted to the first device via a terminal corresponding to the first device, and the indication information may be a sidelink message.

In a possible embodiment, the access network device transmitting the indication information may include that: in a case where the access network device determines that the one or more devices corresponding to the first service are to be deactivated, the access network device transmits the indication information to the one or more devices corresponding to the first service, where the indication information carries the identifier of the first service and is used to indicate the deactivation of the first service.

The indication information may be broadcast or multicast by the access network device to each device. Alternatively, the indication information may be transmitted to each device via a terminal corresponding to each device.

In a possible embodiment, the access network device transmitting the indication information may include that: in a case where the access network device determines that the one or more devices corresponding to the first group are to be deactivated, the access network device transmits the indication information to the one or more devices corresponding to the first group, where the indication information carries the identifier of the first group and is used to indicate the deactivation of the first group. The related processing in the present embodiment is similar to the related processing for the first service in the aforementioned embodiments, which will not be repeated here.

In some embodiments, the second device is a terminal. The terminal may be a terminal capable of serving as a relay device or a proxy device for the first device and/or the one or more devices. The terminal receiving the first information may include that: the terminal receives the first information via a corresponding access network device or AMF.

In one case, the AF may determine the first information related to each terminal of multiple terminals of the network side and configure the terminal via the AMF (or via the AMF through the access network device corresponding to the terminal). The first information related to each terminal may include at least one of: a candidate condition for allowing access to the network that relates to each device of one or more devices served by, associated with, or managed by the terminal; an invalid condition corresponding to each service of one or more services served by, associated with, or managed by each terminal; or an invalid condition corresponding to each group of one or more groups served by, associated with, or managed by each terminal.

In one case, the AF may not determine the first information corresponding to each terminal, but instead transmit the first information as a whole to each terminal. The terminal determines which condition(s) in the first information to be used based on its own associated devices, services, or groups.

In one case, the AF (or the AF via the NEF) transmits second information to the AMF. The AMF determines, based on the second information, the first information related to each terminal corresponding to each access network device of multiple access network devices associated with the AMF, and then transmits first information related to each terminal corresponding to each access network device to the access network device. Each access network device transmits related first information to the corresponding terminal.

For example, the AMF determining, based on the second information, the first information related to each terminal corresponding to each access network device of the multiple access network devices associated with the AMF may include that: the AMF extracts the first information related to each terminal corresponding to each access network device from the second information, based on at least one of the devices, services, or groups served by, associated with, or managed by the terminal.

It should be understood that the above descriptions are merely exemplary descriptions. The actual processing may include, but is not limited to, the above processing methods. As long as the terminal can obtain the first information, regardless of which device or devices determine the first information, it falls within the scope of protection of the present embodiments, which is not limited or exhaustively listed here.

The specific determining method performed by the terminal after receiving the first information is the same as that performed by the AMF in the aforementioned embodiments, which will not be repeated here.

The terminal transmitting indication information may include at least one of: in a case where the terminal determines that the first device is to be deactivated, the terminal transmits the indication information to the first device, where the indication information carries the identifier of the first device and is used to indicate the deactivation of the first device; in a case where the terminal determines that one or more devices corresponding to the first service are to be deactivated, the terminal transmits the indication information to the one or more devices corresponding to the first service, where the indication information carries the identifier of the first service and is used to indicate the deactivation of the first service; or in a case where the terminal determines that one or more devices corresponding to the first group are to be deactivated, the terminal transmits the indication information to the one or more devices corresponding to the first group, where the indication information carries the identifier of the first group and is used to indicate the deactivation of the first group.

The indication information transmitted by the terminal to a single device may be a unicast message, or the indication information transmitted to one or more devices may be a multicast message or a broadcast message.

In some possible implementations, after the first device receives the indication information, the method further includes at least one of: in a case where the indication information carries the identifier of the first device, determining, by the first device, to deactivate; in a case where an identifier of a service run by the first device is the same as the identifier of the first service carried in the indication information, determining, by the first device, to deactivate; or in a case where an identifier of a group to which the first device belongs is the same as the identifier of the first group carried in the indication information, determining, by the first device, to deactivate.

The first device receiving the indication information may refer to that: the first device receives the indication information from the AMF, or the first device receives the indication information from the access network device, or the first device receives the indication information from the terminal. The descriptions related to the AMF, the access network device, and the terminal transmitting indication information are the same as those in the aforementioned embodiments, which will not be repeated here.

The specific processing after the first device receives the indication information may include that: the first device determines to deactivate in a case where any one of the following conditions is met: the indication information carries the identifier of the first device, the identifier of the service run by the first device is the same as the identifier of the first service carried in the indication information, or the identifier of the group to which the first device belongs is the same as the identifier of the first group carried in the indication information.

The description related to the first device determining to deactivate is the same as that in the aforementioned embodiments, which will not be repeated here.

With reference to FIG. 9, an exemplary description is provided, which specifically includes the following steps.

In step 901, an AF transmits first information (e.g., device-related information) to an AMF, either directly or via an NEF. The first information may include a device ID (AIoT device ID), time period information allowed the device (AIoT device) to access the network, area information allowed the device to access the network, or the number of times allowed the device to access network. Alternatively, the first information may include a request for the AMF to set all devices corresponding to a certain service within a specific area or time period to an invalid state (in this case, a service ID or a group ID may be carried to indicate setting multiple devices to an invalid state). The service ID may be an application ID, the group ID may be a certain part or several bits of the device ID.

In step 902, the AMF transmits a service deactivation message to a gNB, based on the access time period information, access area information, or the request message for setting devices corresponding to the certain service within the specific area or time period to the invalid state in step 901.

In step 903, the gNB transmits a deactivation request (i.e., indication information) to an AIoT device.

Specifically, if the gNB determines that multiple devices (AIoT devices) need to be set to the invalid state, based on the service deactivation message, the gNB may add a service ID or a group ID in the deactivation request (or deactivation message), so that the multiple devices (AIoT devices) will be set to the invalid state.

It should be understood that, FIG. 9 is only an exemplary illustration. In actual processing, step 902 may also be that the AMF directly transmits an NAS message (i.e., indication information) for service deactivation to each AIoT device, which is not illustrated in FIG. 9 for the sake of brevity.

Furthermore, it should also be noted that, FIG. 9 only illustrates an AIoT device (i.e., the first device). In actual processing, the scenario corresponding to FIG. 9 may involve setting multiple AIoT devices to the invalid state at once. FIG. 9 does not illustrate the multiple AIoT devices for the sake of brevity, and is not intended to limit the number of AIoT devices in an actual scenario.

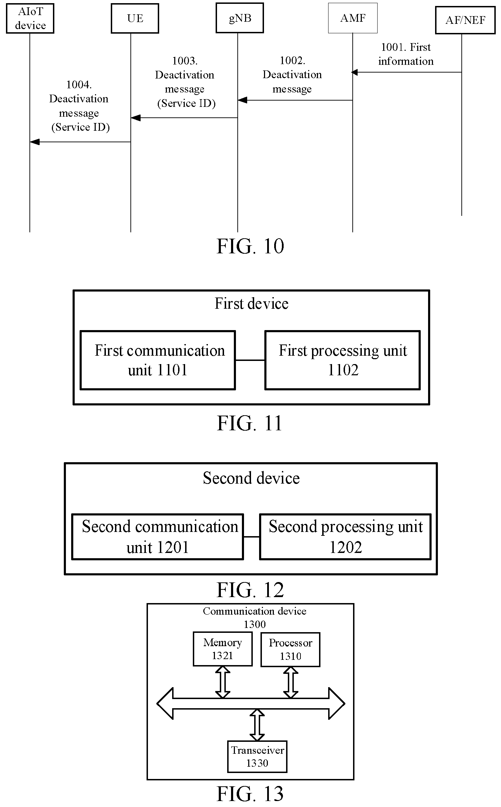

With reference to FIG. 10, another exemplary description is provided, which specifically includes the following steps.

Step 1001 is the same as step 901, which will not be repeated here.

In step 1002, an AMF transmits a deactivation message to a gNB, based on the access time period information, access area information, or the request message for setting AIoT devices corresponding to the certain service within the specific area or time period to an invalid state in step 1001.

In step 1003, the gNB transmits the deactivation message to a UE. The deactivation message may be added to a service ID or group ID, to indicate the deactivation of multiple AIoT devices in a service or group.

In step 1004, the UE transmits the deactivation message (i.e., indication information, which may carry a service ID or group ID) to an AIoT device. Specifically, if multiple devices need to be set to the invalid state, the UE broadcasts the device deactivation message, and adds the service ID or group ID to the device deactivation message, so that the multiple devices (AIoT devices) will be set to the invalid state.

The network side transmits the deactivation message to the UE may be that the AMF directly transmits the NAS message to the UE, or the gNB transmits other messages to the UE.

For the sake of brevity, FIG. 10 only illustrates that the deactivation message includes the service ID, which is not intended as a limitation on actual processing. Furthermore, it should also be noted that, FIG. 10 only illustrates an AIoT device (i.e., the first device). In actual processing, the scenario corresponding to FIG. 10 may involve setting multiple AIoT devices to the invalid state at once. FIG. 10 does not illustrate the multiple AIoT devices for the sake of brevity, and is not intended to limit the number of AIoT devices in an actual scenario.

It can be seen that, by adopting the above solutions, the first device may receive the indication information, and the indication information may be used for the first device to determine whether to deactivate itself. Thus, it is possible to avoid the problem in the related art where some devices that do not need remain connected to the network for a long time cannot be controlled to be deactivated in time, resulting in these devices occupying excessive resources, thereby causing resource waste or affecting other terminals.

Specifically, the above solutions are particularly applicable to the AIoT network. In such network, some AIoT devices do not need to remain connected to the network for a long time. For example, in a logistics scenario, an AIoT device may only need to access the 3GPP network or make the 3GPP network sense its presence within a specific time or specific area. The solutions provided in the present application may promptly control the deactivation of such AIoT devices, thereby avoiding the AIoT devices from occupying excessive resources (e.g., communication resources) and affecting other terminals (including 3GPP smart terminals).

FIG. 11 is a schematic diagram of the component structure of a first device according to an embodiment of the present application, the first device includes:
a first communication unit 1101, configured to receive indication information, where the indication information is used for the first device to determine whether to deactivate.

The indication information includes a condition for allowing access to the network that relates to the first device, and the condition for allowing access to the network that relates to the first device is used for the first device to determine whether to deactivate.

The condition for allowing access to the network that relates to the first device include at least one of: a condition for allowing access to the network corresponding to a service run by the first device; a condition for allowing access to the network corresponding to a group to which the first device belongs; or a condition for allowing access to the network corresponding to the first device.

The condition for allowing access to the network includes at least one of: a time allowed to access the network, an area allowed to access to the network, or the number of times allowed to access the network.

As shown in FIG. 11, the first device further includes:
a first processing unit 1102, configured to determine, by the first device, to deactivate in a case where the condition for allowing access to the network that relates to the first device is not met.

The first communication unit is configured to transmit a first request message, where the first request message is used to request access to the network.

The first request message carries at least one of: an identifier of the first device, an identifier of a service run by the first device, or an identifier of a group to which the first device belongs.

The indication information is carried by a first response message corresponding to the first request message.

The first response message is used to indicate acceptance that the first device accesses the network.

The first response message is used to indicate denying the first device access to the network.

The first processing unit is configured to access, by the first device, a network, in a case where the first response message is used to indicate denying the first device access to the network, and the condition for allowing access to the network that relates to the first device included in the indication information is met.

The indication information is used to indicate at least one of: deactivation of the first device, deactivation of a first service, or deactivation of a first group.

The indication information carries at least one of: an identifier of the first device, an identifier of the first service, or an identifier of the first group.

The first processing unit is configured to perform at least one of: determining, by the first device, to deactivate in a case where the indication information carries the identifier of the first device; determining, by the first device, to deactivate in a case where an identifier of a service run by the first device is the same as the identifier of the first service carried in the indication information; or determining, by the first device, to deactivate in a case where an identifier of a group to which the first device belongs is the same as the identifier of the first group carried in the indication information.

The first device is an ambient power-enabled Internet of Things (AIoT) device.

FIG. 12 is a schematic diagram of the component structure of a second device according to an embodiment of the present application, the second device includes:
a second communication unit 1201, configured to transmit indication information, where the indication information is used for one or more devices to determine whether to deactivate.

The indication information includes a condition for allowing access to the network that relates to a first device, the condition for allowing access to the network that relates to the first device is used for the first device to determine whether to deactivate, and the first device is one of the one or more devices.

The second communication unit is configured to receive a first request message transmitted by the first device, where the first request message is used to request access to the network.

The first request message carries at least one of: an identifier of the first device, an identifier of a service run by the first device, or an identifier of a group to which the first device belongs.

The second communication unit is configured to perform one of: transmitting a first response message to the first device, where the first response message is used to indicate acceptance that the first device accesses the network, and the first response message carries the indication information; or transmitting a first response message to the first device, where the first response message is used to indicate denying the first device access to the network, and the first response message carries the indication information.

The second communication unit is configured to obtain subscription data of the first device, where the subscription data of the first device is used to determine the condition for allowing access to the network that relates to the first device.

The indication information is used to indicate at least one of: deactivation of a first device, where the first device is one of the one or more devices; deactivation of a first service, where the first service corresponds to the one or more devices; or deactivation of a first group, where the first group includes the one or more devices.

The indication information carries at least one of: an identifier of the first device, an identifier of the first service, or an identifier of the first group.

As shown in FIG. 12, the second device further includes a second processing unit 1202, configured to perform at least one of: determining that the first device is to be deactivated, in a case where the first device does not meet a condition for allowing access to the network that relates to the first device; determining that the one or more devices corresponding to the first service are to be deactivated, in a case where the first service meets an invalid condition corresponding to the first service; or determining that the one or more devices included in the first group are to be deactivated, in a case where the first group meets an invalid condition corresponding to the first group.

The condition for allowing access to the network that relates to the first device include at least one of: a condition for allowing access to the network corresponding to a service run by the first device; a condition for allowing access to the network corresponding to a group to which the first device belongs; or a condition for allowing access to the network corresponding to the first device.

The conditions for allowing access to the network include at least one of: a time allowed to access the network, an area allowed to access the network, or the number of times allowed to access the network.

The invalid condition includes at least one of: an invalid time or an invalid area.

The second communication unit is configured to receive first information, where the first information is used to determine at least one of: the condition for allowing access to the network that relates to the first device, the invalid condition corresponding to the first service, or the invalid condition corresponding to the first group.

The second device is one of: a first core network device, an access network device, or a terminal.

Each of the one or more devices is an ambient power-enabled Internet of Things (AIoT) device.

The devices in the embodiments of the present application can implement the corresponding functions of the respective devices in the above authentication method embodiments. The processes, functions, implementations, and beneficial effects corresponding to the various modules (sub-modules, units, or components) of the first device or second device may be referred to the corresponding descriptions in the above method embodiments, which are not repeated here. It should be noted that the functions described for the various modules (sub-modules, units, or components) in the first device or second device of the application embodiments may be implemented by different modules (sub-modules, units, or components) or may be implemented by the same module (sub-module, unit, or component).

FIG. 13 is a schematic structural diagram of a communication device 1300 according to the embodiments of the present application. The communication device 1300 includes a processor 1310. The processor 1310 may invoke and execute a computer program from a memory to enable the communication device 1300 to implement the methods in the embodiments of the present application. In a possible implementation, the communication device 1300 may further include a memory 1320. The processor 1310 may invoke and execute a computer program from the memory 1320 to enable the communication device 1300 to implement the methods in the embodiments of the present application. The memory 1320 may be a separate device independent of the processor 1310, or may be integrated into the processor 1310. In a possible implementation, the communication device 1300 may further include a transceiver 1330. The processor 1310 may control the transceiver 1330 to communicate with other devices. Specifically, it can transmit information or data to other devices, or receive information or data transmitted by other devices. The transceiver 1530 may include a transmitter and a receiver. The transceiver 1330 may further include an antenna, and the number of the antenna may be one or more.

In a possible implementation, the communication device 1300 may be the first device or the second device in the embodiments of the present application, and the communication device 1300 can implement the corresponding processes performed by the first device or the second device in the various methods of the embodiments of the present application, which will not be repeated here for the sake of brevity.

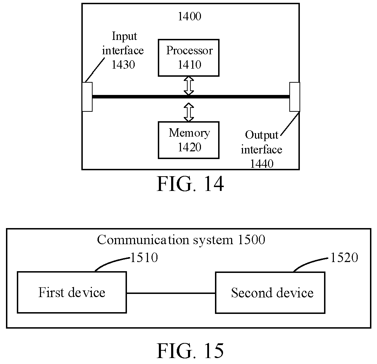

FIG. 14 is a schematic structural diagram of a chip 1400 according to the embodiments of the present application. The chip 1400 includes a processor 1410. The processor 1410 may invoke and execute a computer program from a memory to implement the methods in the embodiments of the present application. In a possible implementation, the chip 1400 may further include a memory 1420. The processor 1410 may invoke and execute a computer program from the memory 1420 to implement the methods performed by the first device or the second device in the embodiments of the present application. The memory 1420 may be a separate device independent of the processor 1410, or may be integrated into the processor 1410. In a possible implementation, the chip 1400 may also include an input interface 1430. The processor 1410 can control the input interface 1430 to communicate with other devices or chips. Specifically, it can obtain information or data transmitted by other devices or chips. In a possible implementation, the chip 1400 may also include an output interface 1440. The processor 1410 can control the output interface 1440 to communicate with other devices or chips. Specifically, it can output information or data to other devices or chips.

In a possible implementation, the chip may be applied to the first device or the second device in the embodiments of the present application, and the chip can implement the corresponding processes performed by the first device or the second device in the various methods of the embodiments of the present application, which will not be repeated here for the sake of brevity. It should be understood that the chip mentioned in the embodiments of the present application may further be referred to as a system-level chip, a system chip, a chip system, or a system-on-a-chip. The processor mentioned above may be a general-purpose processor, a digital signal processor (DSP), a field programmable gate array (FPGA), an application specific integrated circuit (ASIC), or other programmable logic devices, a transistor logic device, or a discrete hardware component. The general-purpose processor may be a microprocessor or any conventional processor. The memory may be a transitory memory or a non-transitory memory, or may include both transitory and non-transitory memories. The non-transitory memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The transitory memory may be a random access memory (RAM). It should be understood that the memory mentioned above is exemplary but not restrictive. For example, the memory in the embodiments of the present application may also be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory SDRAM (enhanced SDRAM, ESDRAM), a synch link dynamic random access memory (synch link DRAM, SLDRAM), or a direct rambus random access memory (direct rambus RAM, DR RAM), etc. That is, the memory in the embodiments of the present application is intended to include, but is not limited to, these and any other suitable types of memory.

FIG. 15 is a schematic block diagram of a communication system 1500 according to the embodiments of the present application. The communication system 1500 includes a first device 1510 and a second device 1520. The first device 1510 may be used to implement the corresponding functions performed by the first device in the above methods. The second device 1520 may be used to implement the corresponding functions performed by the second device in the above methods, which will not be repeated here for the sake of brevity.

The above embodiments may be implemented in whole or in part through software, hardware, firmware, or any combination thereof. When the embodiments are implemented using the software, the software may be realized in a form of a computer program product in whole or in part. The computer program product includes one or more computer instructions. When the computer program instructions are loaded and executed by a computer, processes or functions according to the embodiments of the present application are generated in whole or in part. The computer may be a general-purpose computer, a dedicated computer, a computer network, or any other programmable apparatus. The computer instructions may be stored in a computer-readable storage medium, or transmitted from a computer-readable storage medium to another computer-readable storage medium. For example, the computer instructions may be transmitted from a website, computer, server, or data center to another website, computer, server, or data center via a wired manner (such as coaxial cable, optical fiber, or digital subscriber line (DSL)) or a wireless manner (such as infrared, wireless or microwave). The computer-readable storage medium may be any available medium that can be accessed by a computer, or a data storage device such as a server or a data center that integrates one or more available media. The available medium may be a magnetic medium (e.g., a floppy disk, a hard disk, a magnetic tape), an optical medium (e.g., a DVD), or a semiconductor medium (e.g., a solid state disk (SSD)), or the like.

It should be understood that in the various embodiments of the present application, the magnitude of the serial number of each of the above processes does not mean the order of execution. The order of execution of each process should be determined by its function and internal logic, and should not constitute any limitation on the implementation process of the embodiments of the present application. It may be clearly understood by those skilled in the art that, for convenience and brevity of the description, the specific working procedures of the system, the apparatus and the units described above may refer to the corresponding procedures in the above method embodiments, which will not be repeated here. The above content is only specific implementations of the present application, but the protection scope of the present application is not limited thereto, and any skilled familiar with the technical field may easily think of changes or substitutions within the technical scope disclosed in the present application, which should be all covered within the protection scope of the present application. Therefore, the protection scope of the present application should be subject to the protection scope of the claims.

## Claims

1. A communication method, comprising:
receiving, by a first device, indication information, wherein the indication information is used for the first device to determine whether to deactivate.

2. The method according to claim 1, wherein the indication information comprises a condition for allowing access to a network that relates to the first device, and the condition for allowing access to the network that relates to the first device is used for the first device to determine whether to deactivate.

3. The method according to claim 2, wherein the condition for allowing access to the network that relates to the first device comprises at least one of:
a condition for allowing access to the network corresponding to a service run by the first device;
a condition for allowing access to the network corresponding to a group to which the first device belongs; or
a condition for allowing access to the network corresponding to the first device.

4. The method according to claim 2 or 3, wherein the condition for allowing access to the network comprises at least one of: a time allowed to access the network, an area allowed to access the network, or a number of times allowed to access the network.

5. The method according to any one of claims 2 to 4, wherein after receiving, by the first device, the indication information, the method further comprises:
determining, by the first device, to deactivate in a case where the condition for allowing access to the network that relates to the first device is not met.

6. The method according to any one of claims 2 to 5, wherein before receiving, by the first device, the indication information, the method further comprises:
transmitting, by the first device, a first request message, wherein the first request message is used to request access to the network.

7. The method according to claim 6, wherein the first request message carries at least one of: an identifier of the first device, an identifier of a service run by the first device, or an identifier of a group to which the first device belongs.

8. The method according to claim 6 or 7, wherein the indication information is carried by a first response message corresponding to the first request message.

9. The method according to claim 8, wherein the first response message is used to indicate acceptance that the first device accesses the network.

10. The method according to claim 8, wherein the first response message is used to indicate denying the first device access to the network.

11. The method according to claim 10, further comprising:
accessing, by the first device, the network, in a case where the first response message is used to indicate denying the first device access to the network and the condition for allowing access to the network that relates to the first device included in the indication information is met.

12. The method according to claim 1, wherein the indication information is used to indicate at least one of: deactivation of the first device, deactivation of a first service, or deactivation of a first group.

13. The method according to claim 12, wherein the indication information carries at least one of: an identifier of the first device, an identifier of the first service, or an identifier of the first group.

14. The method according to claim 13, wherein, after receiving, by the first device, the indication information, the method further comprises at least one of:
determining, by the first device, to deactivate in a case where the indication information carries the identifier of the first device;
determining, by the first device, to deactivate in a case where an identifier of a service run by the first device is the same as the identifier of the first service carried in the indication information; or
determining, by the first device, to deactivate in a case where an identifier of a group to which the first device belongs is the same as the identifier of the first group carried in the indication information.

15. The method according to any one of claims 1 to 14, wherein the first device is an ambient power-enabled Internet of Things (AIoT) device.

16. A communication method, comprising:
transmitting, by a second device, indication information, wherein the indication information is used for one or more devices to determine whether to deactivate.

17. The method according to claim 16, wherein the indication information comprises a condition for allowing access to a network that relates to a first device, the condition for allowing access to the network that relates to the first device is used for the first device to determine whether to deactivate, and the first device is one of the one or more devices.

18. The method according to claim 17, wherein before transmitting, by the second device, the indication information, the method further comprises:
receiving, by the second device, a first request message transmitted by the first device, wherein the first request message is used to request access to the network.

19. The method according to claim 18, wherein the first request message carries at least one of: an identifier of the first device, an identifier of a service run by the first device, or an identifier of a group to which the first device belongs.

20. The method according to claim 18 or 19, wherein transmitting, by the second device, the indication information comprises one of:
transmitting, by the second device, a first response message to the first device, wherein the first response message is used to indicate acceptance that the first device accesses the network, and the first response message carries the indication information; or
transmitting, by the second device, a first response message to the first device, wherein the first response message is used to indicate denying the first device access to the network, and the first response message carries the indication information.

21. The method according to any one of claims 18 to 20, wherein after receiving, by the second device, the first request message transmitted by the first device, the method further comprises:
obtaining, by the second device, subscription data of the first device, wherein the subscription data of the first device is used to determine the condition for allowing access to the network that relates to the first device.

22. The method according to claim 16, wherein the indication information is used to indicate at least one of:
deactivation of a first device, wherein the first device is one of the one or more devices;
deactivation of a first service, wherein the first service corresponds to the one or more devices; or
deactivation of a first group, wherein the first group includes the one or more devices.

23. The method according to claim 22, wherein the indication information carries at least one of: an identifier of the first device, an identifier of the first service, or an identifier of the first group.

24. The method according to claim 22 or 23, wherein before transmitting, by the second device, the indication information, the method further comprises at least one of:
determining that the first device is to be deactivated, in a case where the first device does not meet a condition for allowing access to a network that relates to the first device;
determining that the one or more devices corresponding to the first service are to be deactivated, in a case where the first service meets an invalid condition corresponding to the first service; or
determining that the one or more devices included in the first group are to be deactivated, in a case where the first group meets an invalid condition corresponding to the first group.

25. The method according to any one of claims 17 to 21, and 24, wherein the condition for allowing access to the network that relates to the first device comprises at least one of:
a condition for allowing access to the network corresponding to a service run by the first device;
a condition for allowing access to the network corresponding to a group to which the first device belongs; or
a condition for allowing access to the network corresponding to the first device.

26. The method according to any one of claims 17 to 21, 24, and 25, wherein the condition for allowing access to the network comprises at least one of: a time allowed to access the network, an area allowed to access the network, or a number of times allowed to access the network.

27. The method according to claim 24, wherein the invalid condition comprises at least one of: an invalid time or an invalid area.

28. The method according to any one of claims 17 to 20, and 24, wherein before transmitting, by the second device, the indication information, the method further comprises:
receiving, by the second device, first information, wherein the first information is used to determine at least one of: the condition for allowing access to the network that relates to the first device, the invalid condition corresponding to the first service, or the invalid condition corresponding to the first group.

29. The method according to any one of claims 16 to 28, wherein the second device is one of: a first core network device, an access network device, or a terminal.

30. The method according to any one of claims 16 to 29, wherein each of the one or more devices is an ambient power-enabled Internet of Things (AIoT) device.

31. A first device, comprising:
a first communication unit, configured to receive indication information, wherein the indication information is used for the first device to determine whether to deactivate.

32. The first device according to claim 31, wherein the indication information comprises a condition for allowing access to a network that relates to the first device, and the condition for allowing access to the network that relates to the first device is used for the first device to determine whether to deactivate.

33. The first device according to claim 32, wherein the condition for allowing access to the network that relates to the first device comprises at least one of: a condition for allowing access to the network corresponding to a service run by the first device; a condition for allowing access to the network corresponding to a group to which the first device belongs; or a condition for allowing access to the network corresponding to the first device.

34. The first device according to claim 32 or 33, wherein the condition for allowing access to the network comprises at least one of: a time allowed to access the network, an area allowed to access the network, or a number of times allowed to access the network.

35. The first device according to any one of claims 32 to 34, wherein the first device further comprises:
a first processing unit, configured to determine, by the first device, to deactivate in a case where the condition for allowing access to the network that relates to the first device is not met.

36. The first device according to any one of claims 32 to 35, wherein the first communication unit is configured to transmit a first request message, wherein the first request message is used to request access to the network.

37. The first device according to claim 36, wherein the first request message carries at least one of: an identifier of the first device, an identifier of a service run by the first device, or an identifier of a group to which the first device belongs.

38. The first device according to claim 36 or 37, wherein the indication information is carried by a first response message corresponding to the first request message.

39. The first device according to claim 38, wherein the first response message is used to indicate acceptance that the first device accesses the network.

40. The first device according to claim 38, wherein the first response message is used to indicate denying the first device access to the network.

41. The first device according to claim 40, wherein the first processing unit is configured to access, by the first device, a network, in a case where the first response message is used to indicate denying the first device access to the network and the condition for allowing access to the network that relates to the first device included in the indication information is met.

42. The first device according to claim 31, wherein the indication information is used to indicate at least one of: deactivation of the first device, deactivation of a first service or deactivation of a first group.

43. The first device according to claim 42, wherein the indication information carries at least one of: an identifier of the first device, an identifier of the first service, or an identifier of the first group.

44. The first device according to claim 43, wherein the first processing unit is configured to perform at least one of: determining, by the first device, to deactivate in a case where the indication information carries the identifier of the first device; determining, by the first device, to deactivate in a case where an identifier of a service run by the first device is the same as the identifier of the first service carried in the indication information; or determining, by the first device, to deactivate in a case where an identifier of a group to which the first device belongs is the same as the identifier of the first group carried in the indication information.

45. The first device according to any one of claims 31 to 44, wherein the first device is an ambient power-enabled Internet of Things (AIoT) device.

46. A second device, comprising:
a second communication unit, configured to transmit indication information, wherein the indication information is used for one or more devices to determine whether to deactivate.

47. The second device according to claim 46, wherein the indication information comprises a condition for allowing access to a network that relates to a first device, the condition for allowing access to the network that relates to the first device is used for the first device to determine whether to deactivate, and the first device is one of the one or more devices.

48. The second device according to claim 47, wherein the second communication unit is configured to receive a first request message transmitted by the first device, wherein the first request message is used to request access to the network.

49. The second device according to claim 48, wherein the first request message carries at least one of: an identifier of the first device, an identifier of a service run by the first device, or an identifier of a group to which the first device belongs.

50. The second device according to claim 48 or 49, wherein the second communication unit is configured to perform one of: transmitting a first response message to the first device, wherein the first response message is used to indicate acceptance that the first device accesses the network, and the first response message carries the indication information; or transmitting a first response message to the first device, wherein the first response message is used to indicate denying the first device access to the network, and the first response message carries the indication information.

51. The second device according to any one of claims 48 to 50, wherein the second communication unit is configured to obtain subscription data of the first device, wherein the subscription data of the first device is used to determine the condition for allowing access to the network that relates to the first device.

52. The second device according to claim 46, wherein the indication information is used to indicate at least one of: deactivation of a first device, wherein the first device is one of the one or more devices; deactivation of a first service, wherein the first service corresponds to the one or more devices; or deactivation of a first group, wherein the first group includes the one or more devices.

53. The second device according to claim 52, wherein the indication information carries at least one of: an identifier of the first device, an identifier of the first service, or an identifier of the first group.

54. The second device according to claim 52 or 53, wherein the second device further comprises a second processing unit, configured to perform at least one of: determining that the first device is to be deactivated, in a case where the first device does not meet a condition for allowing access to a network that relates to the first device; determining that the one or more devices corresponding to the first service are to be deactivated, in a case where the first service meets an invalid condition corresponding to the first service; or determining that the one or more devices included in the first group are to be deactivated, in a case where the first group meets an invalid condition corresponding to the first group.

55. The second device according to any one of claims 47 to 51, and 54, wherein the condition for allowing access to the network that relates to the first device comprises at least one of: a condition for allowing access to the network corresponding to a service run by the first device; a condition for allowing access to the network corresponding to a group to which the first device belongs; or a condition for allowing access to the network corresponding to the first device.

56. The second device according to any one of claims 47 to 51, 54, and 55, wherein the condition for allowing access to the network comprises at least one of: a time allowed to access the network, an area allowed to access the network, or a number of times allowed to access the network.

57. The second device according to claim 54, wherein the invalid condition comprises at least one of: an invalid time or an invalid area.

58. The second device according to any one of claims 47 to 50, and 54, wherein the second communication unit is configured to receive first information, wherein the first information is used to determine at least one of: the condition for allowing access to the network that relates to the first device, the invalid condition corresponding to the first service, or the invalid condition corresponding to the first group.

59. The second device according to any one of claims 46 to 58, wherein the second device is one of: a first core network device, an access network device, or a terminal.

60. The second device according to any one of claims 46 to 59, wherein each of the one or more devices is an ambient power-enabled Internet of Things (AIoT) device.

61. A first device, comprising a transceiver, a processor, and a memory, wherein the memory is configured to store a computer program, the transceiver is configured to communicate with other devices, and the processor is configured to invoke and execute the computer program stored in the memory, to enable the first device to perform the method according to any one of claims 1 to 15.

62. A second device, comprising a transceiver, a processor, and a memory, wherein the memory is configured to store a computer program, the transceiver is configured to communicate with other devices, and the processor is configured to invoke and execute the computer program stored in the memory, to enable the second device to perform the method according to any one of claims 16 to 30.

63. A chip, comprising a processor, configured to invoke and execute a computer program from a memory, to enable a device equipped with the chip to perform the method according to any one of claims 1 to 15, or claims 16 to 30.

64. A computer-readable storage medium, configured to store a computer program, wherein the computer program, when executed by a device, enables the device to perform the method according to any one of claims 1 to 15, or claims 16 to 30.

65. A computer program product, comprising computer program instructions, wherein the computer program instructions enable a computer to perform the method according to any one of claims 1 to 15, or claims 16 to 30.

66. A computer program, wherein the computer program enables a computer to perform the method according to any one of claims 1 to 15, or claims 16 to 30.
